# EUROPÄISCHE PATENTSCHRIFT

(11) **EP 1 281 166 B1**
(45) Veröffentlichungstag und Bekanntmachung des Hinweises auf die Patenterteilung: **28.01.2004**
(21) Anmeldenummer: 01913640.7
(22) Anmeldetag: 15.02.2001
(51) Int. Cl.: G08B 13/196, H04N 7/14

(54) **BILDGEBENDER BRANDMELDER**
IMAGING FIRE DETECTOR
DETECTEUR D'INCENDIE IMAGEUR

(30) Priorität: 09.03.2000 DE 10011411
(43) Veröffentlichungstag der Anmeldung: 05.02.2003
(73) Patentinhaber: ROBERT BOSCH GMBH, 70442 Stuttgart (DE)
(72) Erfinder: PFEFFERSEDER, Anton, 82054 Sauerlach-Arget (DE); OPPELT, Ulrich, 85604 Zorneding (DE)
(86) Internationale Anmeldenummer: PCT/DE2001/000564
(87) Internationale Veröffentlichungsnummer: WO 2001/067415

(56) Entgegenhaltungen:
- GB-A- 2 312 352
- US-A- 5 005 003
- US-A- 5 289 275
- PATENT ABSTRACTS OF JAPAN vol. 1997, no. 10, 31. Oktober 1997 (1997-10-31) & JP 09 149475 A (FUJI ELECTRIC CO LTD), 6. Juni 1997 (1997-06-06)

## Beschreibung

### Stand der Technik

Die Erfindung geht aus von einem bildgebenden Brandmelder nach der Gattung des unabhängigen Patentanspruchs.

Aus der Patentanmeldung JP-082 029 67 A ist es bereits bekannt, einen Brandmelder mit einer Videokamera als bildgebende Vorrichtung zu verwenden. Die Videokamera ist in einem Tunnel platziert, und die Aufnahmesignale der Videokamera werden mittels eines Analog-/Digital-Wandlers in ein digitales Signal umgewandelt. Die digitalen Signale werden gespeichert, und ein Prozessor ermittelt ein Helligkeitshistogramm. Durch einen Vergleich der Pixelzahl bei einem bestimmten Helligkeitswert wird festgestellt, ob ein Brand vorliegt oder nicht.

Aus US-A-5,289,275 ist ein Vergleich von Kantenbildern mit einem Referenzbild bekannt. Es werden hier einzelne Bilder mit dem Referenzbild verglichen. Weiterhin wird beschrieben, dass von einem Bild die Strahlungsenergie abgeleitet wird, um einen.Brand zu erkennen. Der Brand wird dabei an einem Bild erkannt. Dabei wird das Ausmaß der Flammen untersucht, um dann in Kombination mit einer Temperaturmessung die Strahlungsenergie abzuschätzen die zur Beurteilungen führt, ob ein Brand vorliegt oder nicht. Es werden dabei auch Übergänge der Strahlungsenergie von Probe zu Probe beachtet.

### Vorteile der Erfindung

Der erfindungsgemäße bildgebende Brandmelder mit den Merkmalen des unabhängigen Patentanspruchs hat demgegenüber den Vorteil, dass mittels der Auswertung einer Bildfolge die aufgenommene Szene über eine Zeitdauer hinweg zur Ermittlung, ob ein Brand vorliegt oder nicht, verwendet wird. Damit haben Momentaufnahmen wie vorbeifahrende Fahrzeuge keinen Einfluss auf die Prognose, ob ein Brand vorliegt oder nicht. Weiterhin ermöglicht die Ermittlung der zeitlichen Abhängigkeit eines Brandes die Prognose, wie sich der Brand weiterentwickelt, was für eine Brandbekämpfung von großem Nutzen ist. Dann ist es nämlich möglich, dass Brandbekämmpfungseinheiten entsprechende Mittel vorhalten, um den aktuellen Brand effizient zu bekämpfen.

Der erfindungsgemäße Brandmelder ermöglicht, dass mehrere Brandkenngrößen sich in Kombination erfassen lassen, um daraus eine sichere Aussage zu treffen, ob ein Brand vorliegt oder nicht. Zu solchen Brandkenngrößen gehören der Brandrauch, die Verbrennungswärme, Wärmestrahlung, eine Gasdetektion und eine Lichterscheinung durch die Flammen. Dabei kann eine Auswahl aus diesen charakteristischen Kenngrößen für einen Brand getroffen werden.

Weiterhin ist es von Vorteil, dass aufgrund des großen Kamerasichtfeldes und der Unabhängigkeit von anderen Sensoren der erfindungsgemäße Brandmelder sowohl innen als auch außen verwendet werden kann, was die Einsatzmöglichkeiten des Brandmelders entscheidend vergrößert. Damit wird nicht nur eine Überwachung von Innenräumen von Gebäuden, von Tunneln und Lagern möglich, sondern auch die Überwachung von Wäldern und Außenanlagen.

Der erfindungsgemäße Brandmelder kann weiterhin vorteilhafterweise mit einer Brandbekämpfungsanlage verknüpft werden, so dass damit eine automatische Brandbekämpfung aufgrund einer Analyse des entstandenen Brandes durchgeführt wird.

Durch die in den abhängigen Ansprüchen aufgeführten Maßnahmen und Weiterbildungen sind vorteilhafte Verbesserungen des in dem unabhängigen Patentanspruch angegebenen bildgebenden Brandmelders möglich.

Besonders von Vorteil ist es, dass mit der Brandmeldung auch entweder eine Bildfolge oder nur ein Bild des aufgenommenen Brandes mit versandt wird, so dass die empfangende Einheit der Brandmeldung entnimmt, wie der Brand sich entwickelt und wie der Brand am effizientesten zu bekämpfen ist. Dies erhöht die Funktionsfähigkeit des Brandmelders erheblich, da nicht nur entschieden wird, ob ein Brand vorliegt oder nicht, sondern es ist damit auch möglich, eine Prognose zu treffen, wie sich der Brand entwickelt und wie der Brand am effektivsten zu bekämpfen ist.

Weiterhin ist es von Vorteil, dass die Komponenten des Brandmelders, die bildgebende Vorrichtung, der Prozessor, der Speicher und die Kommunikationsmittel, in einem Gehäuse untergebracht sind. Damit ist der Einbau und die Installation des Brandmelders mit einem geringen Aufwand verbunden.

Darüber hinaus ist es von Vorteil, dass die bildgebende Vorrichtung abgesetzt von den übrigen Komponenten des Brandmelders eingesetzt werden kann, wodurch eine höhere Flexibilität der Einsatzmöglichkeiten des Brandmelders ermöglicht wird. Dies ermöglicht insbesondere eine einfachere Installation sowohl der Kamera als auch der übrigen Komponenten, die sich nun allein an einer effektiven Platzierung der einzelnen Komponenten orientiert.

Des weiteren ist es von Vorteil, eine Videokamera als bildgebende Vorrichtung zu verwenden, die eine lebensechte Darstellung der beobachteten Szene liefert. Damit wird darüber hinaus eine Objektanalyse möglich, wobei einzelne dargestellte Objekte automatisch analysiert werden, insbesondere im Hinblick, ob diese Objekte durch Rauch, Wärmeschlieren oder Feuer verdeckt werden. Dies wird durch einen Vergleich mit abgespeicherten Objekten durchgeführt. Damit wird eine eindeutige Identifizierung eines Brandes und die Entwicklung des Brandes möglich. Dies führt zu einer effektiven Brandbekämpfung.

Weiterhin ist es von Vorteil, dass als bildgebende Vorrichtung eine Infrarotkamera, entweder eine Wärmebildkamera oder ein Thermosäulenfeld, zur Brandüberwachung verwendet wird. Damit wird insbesondere eine Analyse auf Wärmenester und Hitzeerscheinungen konzentriert. Dies ermöglicht eine einfache Brandanalyse, da hier im Wesentlichen die Wärmeentwicklung überwacht wird.

Durch die Verwendung einer Optik für die verwendete bildgebende Vorrichtung ist es möglich, die Strahleinkopplung zu optimieren, um damit insbesondere in den Anfängen eines Brandes den Brand anhand schwacher Signale zu erkennen. Dies ist insbesondere für eine Brandfrüherkennung von Vorteil, da dann rechtzeitig eine Brandbekämpfung eingeleitet werden kann.

Darüber hinaus ist es von Vorteil, dass eine Lichtquelle mit der bildgebenden Vorrichtung verwendet wird, um solche charakteristischen Kenngrößen wie eine Trübung und Streuung an Rauchpartikeln zu identifizieren. Dazu ist eine definierte Beleuchtung und damit eine Lichtquelle notwendig. Damit werden also vorteilhafterweise solche charakteristischen Kenngrößen eines Brandes identifiziert.

Es ist weiterhin von Vorteil, dass der erfindungsgemäße Brandmelder mittels eines Vergleichs von abgespeicherten Daten mit aufgenommenen Daten Wärmeschlieren und Rauchwolken als charakteristische Kenngrößen eines Brandes identifiziert. Damit wird eine eindeutige Branderkennung an Kenngrößen eines Brandes möglich, die nicht direkt mit der Feuererscheinung selbst zu tun haben. Dies ermöglicht eine Brandidentifikation, auch wenn der Brand an einer für die bildgebende Vorrichtung ungünstigen Stelle auftritt.

Der Einfluß von charakteristischen Kenngrößen eines Brandes auf die aufgenommene Bildfolge wird vorteilhafterweise durch eine sich verändernde Strukturschärfe in der Bildfolge ermittelt. Dies ist eine einfache und klare Identifikation eines Brandes, die weiterhin mit anderen Merkmalen verknüpft wird, um einen Brand zu identifizieren.

Darüber hinaus ist es von Vorteil, dass der erfindungsgemäße Brandmelder eine Flammenklassifikation durchführt, welche dann mit der Brandmeldung und der Kommunikationsmittel des Brandmelders versandt wird, um brandbekämpfende Einheiten optimal zu informieren, so dass die brandbekämpfenden Einheiten sich auf den Brand vorbereiten können, bevor sie den Brandort erreichen. Dabei können die Kommunikationsmittel auch eine angeschlossene Sirene, eine Alarmleuchte oder ein Alarmrelais sein.

Weiterhin ist es von Vorteil, dass Änderungen in der Bildfolge durch Vergleiche mit Referenzbildern ermittelt. werden, wobei kurzfristige Änderungen ausgefiltert werden, indem die Erscheinung der kurzfristigen Änderungen mit einem zeitlichen Schwellenwert verglichen wird. Damit werden vorteilhafterweise kurzfristige Erscheinungen wie z.B. das Auftauchen eines Insekts im Blickfeld der bildgebenden Vorrichtung oder das Vorbeifahren eines Fahrzeugs aus der Analyse für die Branderkennung eliminiert. Dies reduziert erheblich die Brandfehlmeldungen.

Des weiteren ist es von Vorteil, dass der Prozessor mittels Ortsfrequenzen, die er aus den ermittelten Bildfolgen gewinnt, eindeutig Änderungen identifiziert, wobei die Analyse von Ortsfrequenzen eine leicht implementierbare Technik ist. Dieser Vorteil wird durch den Einsatz eines Strichcodes, der gegenüber der bildgebenden Vorrichtung des Brandmelders platziert wird, erhöht, weil durch diesen Strichcode zum einen ein einfach identifizierbares Muster für die Erzeugung der Ortsfrequenzen vorliegt und zum anderen in dem Strichcode Informationen codiert sind, die anhand der Bildanalyse im Brandmelder ausgewertet werden. Solch eine Information ist zum Beispiel ein Einsatzcode.

Schließlich ist es von Vorteil, dass der erfindungsgemäße Brandmelder auch als Einbruchmelder verwendet wird, in dem auftretende Personen durch eine Objektanalyse identifiziert werden, um gegebenenfalls eine Einbruchwarnung zu übermitteln. Dies ist insbesondere für einen Brandmelder dann von Vorteil, wenn die Gefahr des Vandalismus, der die Ursache eines Brandes sein kann, vorliegt.

Weiterhin ist es von Vorteil, dass eine Brandmeldung dadurch erzeugt wird, dass eine Kombination von mehreren charakteristischen Kenngrößen für einen Brand und/oder Ergebnisse von mehreren Analysemethoden zur Branderkennung verwendet wird. Dadurch wird vorteilhafterweise die Zahl von fehlerhaften Brandmeldungen erheblich reduziert.

### Zeichnung

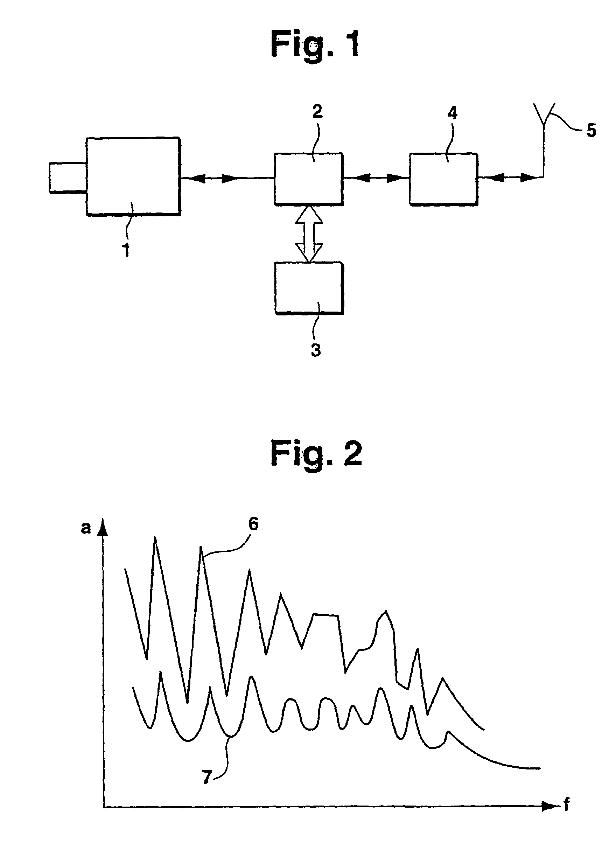

Ausführungsbeispiele der Erfindung sind in der Zeichnung dargestellt und werden in der nachfolgenden Beschreibung näher erläutert. Es zeigen Figur 1 den erfindungsgemäßen Brandmelder und Figur 2 Ortsfrequenzen, die aus Bildern ermittelt werden, einmal ohne Trübung und zum anderen mit Trübung.

### Beschreibung

Die Erkennung von Bränden wird anhand charakteristischer Kenngrößen eines Brandes ermittelt. Zu den Kenngrößen gehören Brandrauch, Verbrennungswärme, Wärmestrahlung, Gasdetektion und Lichterscheinungen der Flammen. Bei Rauch wird insbesondere der Partikeldurchmesser, die Farbe des Rauches, die Rauchdichte und die Trübung von Objekten analysiert. Die Wärmeentwicklung, die einen Brand normalerweise begleitet, führt zu Wärmeschlieren, die zu einer Veränderung des Brechungsindex der Luft führen und damit optisch identifizierbar sind. Ein Brand ist insbesondere ein zeitliches Phänomen. Daher ist es notwendig, die zeitliche Entwicklung eines Brandes zu ermitteln, so dass eine differenzielle Messung, also der Vergleich von aufeinanderfolgenden Zeitpunkten einer Messung und damit eine Brandüberwachung, ermöglicht wird.

Erfindungsgemäß wird daher der Brandmelder mittels einer bildgebenden Vorrichtung eine Bildfolge erzeugen, die durch einen Prozessor des Brandmelders analysiert wird, um gegebenenfalls eine Brandmeldung auszuweisen und um diese Brandmeldung mittels Kommunikationsmitteln zu versenden. Damit wird insbesondere der zeitliche Verlauf eines entstehenden Brandes analysiert. Die Brandmeldung wird in einer Weiterbildung mit einem Bild oder Bildfolgen versehen, um eine effiziente Brandbekämpfung vorzubereiten. Durch Verwendung einer Video- oder Infrarotkamera werden jeweils unterschiedliche Merkmale vorzugsweise analysiert. Durch Verwendung einer zusätzlichen Lichtquelle wird die Trübung und/oder Streuung durch Rauch in den Bildfolgen ermittelt. Durch eine Analyse von Strukturschärfen von Ortsfrequenzen und den Vergleich von Bildfolgen mit Referenzbildern erkennt der Prozessor Änderungen in den Bildfolgen, wobei der Prozessor kurzfristige Änderungen mittels eines Schwellenwerts für die Dauer der Änderungen identifiziert und verwirft.

In Figur 1 ist der erfindungsgemäße Brandmelder als Blockschaltbild dargestellt. Eine Kamera 1 als bildgebende Vorrichtung ist über einen Datenein-/-ausgang mit einem ersten Datenein-/-ausgang eines Prozessors 2 verbunden. Über seinen zweiten Datenein-/-ausgang ist der Prozessor 2 mit einem Speicher 3 verbunden. An einen dritten Datenein-/ausgang des Prozessors 2 ist eine Sende-/Empfangsstation 4 angeschlossen. An einen zweiten Datenein-/-ausgang der Sende-/Empfangsstation 4 ist eine Antenne 5 angeschlossen.

Die Kamera 1 als die bildgebende Vorrichtung beobachtet das im Hinblick auf einen Brand zu überwachende Gebiet. Die Kamera 1 ist dabei hier fest auf ein zu beobachtendes Gebiet eingestellt oder alternativ mittels eines Elektromotors bewegbar, um die Kamera 1 in verschiedene Richtungen zu bewegen. Der Elektromotor ist dann Teil der Kamera 1 und wird durch den Prozessor 2 gesteuert, gegebenenfalls über Eingabesignale, die von der Antenne 5 und der Sende/Empfangsstation 4 empfangen wurden und die an den Prozessor 2 übertragen werden.

Als Kamera 1 wird hier eine Videokamera verwendet. Die Signale von der Videokamera werden von an der Kamera 1 angeschlossener Elektronik digitalisiert und dann an den Prozessor 2 übertragen. Die videokamera kann auch selbst schon einen digitalen Ausgang aufweisen, zum Beispiel nach dem Standard IEEE 1394. Eine weitere Möglichkeit stellt eine digitale Kamera dar, die für die Aufnahme von Einzelbildern verwendet werden kann und die eine Rechnerschnittstelle aufweist, die dann mit dem Prozessor 2 verbunden wird. Voraussetzung für den Einsatz einer digitalen Kamera ist, dass die Bildfolge noch ausreichend groß für die Bildänderungen zur Branddetektion ist. Eine noch als geeignet betrachtete Bildfolgefrequenz liegt bei circa einem Bild pro Sekunde.

Die Videokamera kann auch eine Kamera sein, die im nahen Infrarot, also bei Lichtwellenlängen unter einem Mikrometer, empfindlich ist, was den Vorteil hat, dass als Beleuchtungsquelle eine Infrarotbeleuchtungsquelle verwendet werden kann, die durch das menschliche Auge nicht wahrgenommen wird und damit nicht stört.

Alternativ ist es möglich, eine Infrarotkamera zu verwenden. Als Infrarotkamera ist entweder eine Wärmebildkamera oder ein Thermosäulenfeld (im internationalen Sprachgebrauch Thermopile Array) einsetzbar. Eine Wärmebildkamera erfaßt die von jedem Körper gesendete Temperaturstrahlung. Unabhängig von irgendeiner Beleuchtung erhält man ein Abbild des Wärmeprofils einer Szene. Die Wellenlänge, bei der maximale Emission auftritt, ist dabei abhängig von der Temperatur. Ein Körper mit normaler Umgebungstemperatur hat sein Emissionsmaximum bei circa 10 µm, ein heißer Körper von circa 700 °C hat sein Emissionsmaximum bei circa 3 µm. Der Erfassungsbereich einer Wärmebildkamera ist in diesem Strahlungsspektrum empfindlich.

Ein einfaches Verfahren zur Messung einer Temperaturstrahlung ist die Verwendung einer Thermosäule eventuell mit einer Optik. Hiermit ist jedoch nur möglich, ein Flächenelement auf Temperaturstrahlung hin zu vermessen. Daher werden mehrere Thermosäulen in einer Zeile oder in einer Matrix (Array) angeordnet, was eine bildgebende Vorrichtung mit niedriger Auflösung ermöglicht. Mit Algorithmen zur Bildanalyse werden dann die aufgenommenen Bilder analysiert.

Die verschiedenen charakteristischen Kenngrößen eines Brandes sind mit diesen unterschiedlichen Kameratypen mit unterschiedlicher Genauigkeit ermittelbar. Während die videokamera insbesondere für die Erkennung von Brandrauch und einer Flammenklassifikation geeignet ist, ist eine Infrarotkamera vor allem für Wärmeerscheinungen durch den Brand geeignet.

Durch das zusätzliche Anbringen einer Lichtquelle in einem geeigneten Wellenlängenbereich für die Kamera 1 als die bildgebende Vorrichtung ist insbesondere die Identifikation von Rauch möglich, da die Partikelgröße von Rauchteilchen durch Lichtstreuung an diesen Rauchpartikeln erkannt wird, wobei sich dabei eine Korona um die definierte Lichtquelle bildet. Auch die Trübung kann durch Auswertung der Helligkeit in der definierten Lichtquelle im Bildbereich bestimmt werden. Die Lichtquelle ist für eine Videokamera oder Infrarotkameras im nahen Infrarot bei Lichtwellenlängen von kleiner als 900 nm geeignet und emittiert Licht bei entsprechenden Wellenlängen. Insbesondere bei solchen Infrarotkameras ist eine Beleuchtung der der Infrarotkamera gegenüberliegenden Wand ausreichend.

Die Lichtempfindlichkeit kann bei einer Videokamera durch die Akkumulation von mehreren Bildern erhöht werden, wobei dann das entstehende akkumulierte Bild mit einem Referenzbild verglichen wird, um keine Information durch das damit auftretende Tiefpaßverhalten bei dem durch die Akkumulation gemittelten Bild zu verlieren. Damit kann in vielen Fällen auf eine getrennte Beleuchtung verzichtet werden.

Die Zahl der Bilder hängt einerseits von der Kamera 1 selbst ab und andererseits kann die Wiederholfrequenz der Bilder durch den Prozessor 2 gesteuert werden.

Der Prozessor 2 erhält von der Kamera 1 die Bildfolgen als digitale Daten. Der Prozessor 2 speichert diese Daten in dem Speicher 3 ab, um dann eine Analyse der Bildfolgen durchzuführen. Als der Speicher 3 wird ein wiederbeschreibbarer Speicher, hier eine Festplatte, verwendet. Der Prozessor 2 analysiert die Bildfolge auf auftretende Objekte, um gegebenenfalls Rauchwolken und/oder Wärmeschlieren als neue Objekte zu identifizieren oder um die Trübung von bekannten Objekten in der beobachteten Szene zu ermitteln. Die bekannten Objekte der Szene sind im Speicher 3 ebenfalls abgespeichert und werden von dem Prozessor 2 zu einem Vergleich aufgerufen.

Erkennt der Prozessor 2 dabei Flammen als neue Objekte, klassifiziert er die Flammen mittels abgespeicherter Referenzobjekte für Flammen. Diese Klassifikation wird dann mit einer Brandmeldung, die aus dem Speicher 3 für einen erkannten Brand geladen wird, um dann mittels der Sende/Empfangsstation 4 und der Antenne 5 die Brandmeldung zu versenden. Durch einen zeitlichen Verlauf der Flammenklassifikation ist eine Abschätzung der Brandentwicklung möglich und geeignete Mittel und Maßnahmen zur Brandbekämpfung können vorgesehen werden.

Als Kommunikationsmittel sind neben einer Sende/Empfangsstation und einem Modem auch Kommunikationsmittel wie eine Sirene, einer Alarmleuchte oder ein Alarmrelais möglich. Diese werden entweder mittels Leitungen oder mittels einer drahtlosen Übertragung mit dem Brandmelder verbunden.

Neben der reinen Objektanalyse ist es für den Prozessor 2 auch möglich, mittels einer zeitlichen Änderung der Strukturschärfe in den Bildfolgen eine Änderung und damit einen entstehenden Brand zu ermitteln. Die sich ändernde Strukturschärfe von Objekten in einer beobachteten Szene ist beispielsweise auf die Erscheinung von Wärmeschlieren oder schwachem Rauch zurückzuführen, der zu einer Trübung führt.

Kurzfristige Änderungen in den Bildfolgen werden mittels eines Schwellenwerts für die Zeitdauer des Erscheinens dieser Änderung identifiziert. Verschwindet die Änderung in einer Zeit, die kleiner als die des Schwellenwerts ist, dann wird diese kurzfristige Änderung als irrelevant verworfen. Dabei werden hier in dem Kamerabild enthaltene Strukturinformationen ausgewertet, wobei Helligkeitsänderungen und unterschiedliche Beleuchtung der Szene im Detektionsergebnis unberücksichtigt bleiben. Die Strukturinformation wird dadurch ermittelt, indem ein Gradient der Helligkeitswerte und/oder Farbwerte in horizontaler Richtung und vertikaler Richtung der Kamerabilder und damit eine sogenannte Kanteninformation oder die Information der Grauwert- bzw. Farbwertsprünge im beobachteten Bereich ermittelt werden. Durch bekannte Korrelationstechniken wird dabei festgestellt, ob eine Änderung vorliegt oder nicht, indem ein Korrelationskoeffizient mit einem Schwellwert verglichen wird. Liegt eine Übereinstimmung vor, dann ist der Korrelationskoeffizient über dem Schwellwert, liegt keine Übereinstimmung vor, dann liegt der Korrelationskoeffizient unter dem Schwellwert.

Bildrauschen wird weiterhin durch bekannte statistische Signifikantstests eliminiert, wobei der statistische Signifikantstest einen Zahlwert ergibt, der im Vergleich zu einem Schwellwert zur Überprüfung herangezogen wird, ob Bildrauschen vorliegt oder nicht. Es sollen also globale Veränderungen für größere Zeitspannen erkannt werden, während kurzfristige Veränderungen eliminiert werden sollen.

Störungen wie Bildrauschen sind insbesondere für den Einsatz des erfindungsgemäßen Brandmelder im Freien wichtig, da die Störungen dort vermehrt auftreten und derart behandelt werden, dass sie zu keinen Brandfehlmeldungen führen.

Der Prozessor 2 führt in einer Weiterbildung der Erfindung eine Auflösung der Bilder der Bildfolgen in Ortsfrequenzen durch, und anhand der Ortsfrequenzänderung erkennt der Prozessor 2 eine Änderung in der Bildfolge, wobei auch hier Schwellenwerte verwendet werden, um Änderungen, die durch Rauschen oder eben durch einen Brand verursacht werden oder durch kurzfristige Änderungen hervorgerufen werden, zu identifizieren. Das Spektrum der Ortsfrequenzen ist dabei ein Maß für die Detailgenauigkeit der beobachteten Szene, wobei eine Trübung durch Rauch zu einer Abnahme der Detailgenauigkeit und damit zu einer Veränderung im Spektrum der Ortsfrequenzen führt. Die Ortsfrequenzen werden hier durch Fouriertransformation des Bildinhalts oder von Teilen davon durch den Prozessor 2 erzeugt. Liegen in der beobachteten Szene keine Strukturen vor, die zu hochfrequenten Ortsfrequenzen führen, können solche Strukturen durch künstliche Strukturen gegenüber der Kamera 1 erzeugt werden. Solche Strukturen sind hier einem Strichcode ähnlich, also senkrechte Linienmuster, wobei in dem Strichcode auch Informationen codiert sein können.

Durch einen zeitlichen Verlauf der Ortsfrequenzen lassen sich dann Veränderungen erkennen, die durch einen Brand hervorgerufen werden, wobei insbesondere eine Trübung, wie es weiter unten dargestellt ist, zu einer Veränderung der Ortsfrequenzen führt.

Hat der Prozessor 2 nun einen Brand identifiziert, dann versendet der Prozessor 2 mittels der Sende-/Empfangsstation 4 und der Antenne 5 eine Brandmeldung, wobei der Prozessor 2 Bilder oder Bildfolgen des Brandes und auch eine Flammenklassifikation mit versendet. Die Sende/Empfangsstation 4 und die Antenne 5 bilden hier ein Mobiltelefon, das für die Übertragung der Brandmeldung verwendet wird. Alternativ kann auch eine andere Funkübertragung verwendet werden oder auch eine leitungsgebundene Datenübertragung, wobei anstatt der Sende/Empfangsstation 4 und der Antenne 5 dann ein Modem verwendet wird, um den Brandmelder an ein Kommunikationsnetz anzuschließen. Eine weitere Alternative stellen Kommunikationsmittel wie eine Sirene, eine Alarmleuchte oder ein Alarmrelais dar.

In Figur 2 ist die Analyse mittels Ortsfrequenzen einmal für einen Brand und ohne Brand dargestellt. Auf der Abszisse sind die Ortsfrequenzen eingetragen, während auf der Ordinate der Betrag der Ortsfrequenzen abgetragen wird. Das Spektrum 6 bezeichnet ein Ortsfrequenzspektrum einer Szene ohne einen Brand. Das Ortsfrequenzspektrum 7 bezeichnet das Ortsfrequenzspektrum der gleichen Szene mit einem Brand. Aufgrund der Trübung sind die Beträge der einzelnen Ortsfrequenzen reduziert, was eine Identifikation eines Brandes ermöglicht, da hier das Ortsfrequnzspektrum 6 und 7 zu verschiedenen Zeitpunkten aufgenommen wurden. Dies zeigt, dass mittels Ortsfrequenzen die zeitliche Entstehung eines Brandes vor allem durch eine zeitlich aufeinanderfolgende Bildfolge erkannt wird, während mittels eines Einzelbildes die Analyse viel schwerer und zweideutig wäre. Dabei müssten dann die einzelnen Beträge der Ortsfrequenzen mittels abgespeicherter Beträge verglichen werden, wobei unterschiedliche Raucherscheinungen zu unterschiedlichen Beträgen führen würden. Insbesondere zu Beginn eines Brandes werden die Beträge der Ortsfrequenzen sich nur leicht reduzieren, was aber mit einer Bildfolge leicht erkannt wird.

Wärmeschlieren führen zu periodischen Veränderungen im Bild, die sich im zeitlichen Verlauf der Ortsfrequenzen messen lassen.

Durch eine Merkmalsverknüpfung einerseits von verschiedenen charakteristischen Kenngrößen eines Brandes und andererseits durch die Ergebnisse der verschiedenen Analyseverfahren kann in einer Weiterbildung der Erfindung eine Brandmeldung nur abgesetzt werden, wenn eine Mehrheit entweder der charakteristischen Kenngrößen eines Brandes oder die Ergebnisse der Analyseverfahren einen Brand anzeigen. Dies reduziert vorteilhafterweise die Anzahl von Brandfehlmeldungen.

Der erfindungsgemäße Brandmelder kann in einer Weiterbildung auch als Einbruchsmelder verwendet werden, wobei erkannte Personen durch Objektanalyse und Bildfolgenanalyse mittels Ortsfrequenzen leicht erkannt werden und dies dann mittels einer Einbruchsmeldung von dem Prozessor 2 mittels der Sende-/Empfangsstation 4 und der Antenne 5 versandt wird, wobei auch hier die Alternativen bezüglich der Kommunikationsmittel wie oben dargestellt möglich sind.

Der erfindungsgemäße Brandmelder ist entweder kompakt in einem Gehäuse untergebracht oder alternativ wird die Kamera 1 abgesetzt von den übrigen Komponenten betrieben, wobei dann an den Prozessor 2 mehrere Kameras angeschlossen sein können.

## Patentansprüche

1. Bildgebender Brandmelder, wobei der Brandmelder wenigstens eine bildgebende Vorrichtung (1), einen.Prozessor (2), einen Speicher (3) und Kommunikationsmittel (4, 5) aufweist, und wobei der Prozessor (2) derart ausgebildet ist, dass der Prozessor (2) in Abhängigkeit von einer Analyse von Bildfolgen, die die bildgebende Vorrichtung (1) erzeugt, eine Brandmeldung ausweist und die Brandmeldung gegebenenfalls mittels der Kommunikationsmittel (4, 5) versendet, **dadurch gekennzeichnet, dass** der Prozessor (2) so ausgebildet ist, dass er aus den Bildfolgen eine zeitliche Änderung der Strukturschärfe ermittelt und daraus gegebenenfalls eine Brandmeldung ableitet.

2. Bildgebender Brandmelder nach Anspruch 1, **dadurch gekennzeichnet, dass** der Prozessor (2) derart ausgebildet ist, dass der Prozessor (2) mit der Brandmeldung ein Bild oder eine Bildfolge mittels der Kommunikationsmittel (4, 5) versendet.

3. Bildgebender Brandmelder nach Anspiuch 1 oder 2, **dadurch gekennzeichnet, dass** die bildgebende Vorrichtung (1), der Prozessor (2), der Speicher (3) und die Kommunikationsmittel (4, 5) in einem Gehäuse untergebracht sind.

4. Bildgebender Brandmelder nach Anspruch 1 oder 2, **dadurch gekennzeichnet, dass** die bildgebende Vorrichtung (1) abgesetzt von dem Prozessor (2), dem Speicher (3) und den Kommunikationsmitteln (4, 5) einsetzbar ist.

5. Bildgebender Brandmelder nach Anspruch 3 oder 4, **dadurch gekennzeichnet, dass** die bildgebende vorrichtung (1) eine Videokamera ist.

6. Bildgebender Brandmelder nach Anspruch 3 oder 4, **dadurch gekennzeichnet, dass** die bildgebende Vorrichtung eine Infrarotkamera ist.

7. Bildgebender Brandmelder nach Anspruch 6, **dadurch gekennzeichnet, dass** die Infrarotkamera entweder als Wärmebildkamera oder als Thermosäulenfeld ausgebildet ist.

8. Bildgebender Brandmelder nach Anspruch 5 oder 6, **dadurch gekennzeichnet, dass** die bildgebende Vorrichtung (1) eine Optik aufweist.

9. Bildgebender Brandmelder nach Anspruch 8, **dadurch gekennzeichnet, dass** die bildgebende Vorrichtung mit einer Lichtquelle ausgestattet ist.

10. Bildgebender Brandmelder nach Anspruch 9, **dadurch gekennzeichnet, dass** der Brandmelder so ausgebildet ist, dass der Brandmelder mittels der Lichtquelle eine Trübung und/oder Streuung durch Rauch in den Bildfolgen ermittelt.

11. Bildgebender Brandmelder nach einem der vorhergehenden Ansprüche, **dadurch gekennzeichnet, dass** der Prozessor (2) so ausgebildet ist, dass der Prozessor (2) mittels im Speicher (3) abgespeicherter Daten Wärmeschlieren und/oder Rauchwolken in den Bildfolgen ermittelt.

12. Bildgebender Brandmelder nach einem der vorhergehenden Ansprüche, **dadurch gekennzeichnet, dass** der Prozessor (2) derart ausgebildet ist, dass der Prozessor (2) anhand der Bildfolge eine Klassifikation von Flammen durchführt und die Klassifikation mit der Brandmeldung mittels der Kommunikationsmittel (4, 5) versendet.

13. Bildgebender Brandmelder nach einem der vorhergehenden Ansprüche, **dadurch gekennzeichnet, dass** der Prozessor (2) derart ausgebildet ist, dass der Prozessor (2) Änderungen in den Bildfolgen mittels eines Vergleichs mit einem Referenzbild erkennt und kurzfristige Änderungen mittels eines Schwellwerts für die Dauer der Änderung identifiziert.

14. Bildgebender Brandmelder nach Anspruch 14, **dadurch gekennzeichnet, dass** der Prozessor (2) so ausgebildet ist, dass der Prozessor (2) Bilder der Bildfolgen in Ortsfrequenzen auflöst und anhand der Ortsfrequenzänderung eine Änderung in der Bildfolge erkennt.

15. Bildgebender Brandmelder nach Anspruch 14, **dadurch gekennzeichnet, dass** für die Messung der Ortsfrequenzen durch den bildgebenden Brandmelder zusätzliche Strukturen angebracht sind, die als Strichcode ausgebildet sind, wobei in dem Strichcode Informationen codiert sind.

16. Bildgebender Brandmelder nach einem der vorhergehenden Ansprüche, **dadurch gekennzeichnet, dass** der Brandmelder als Einbruchsmelder verwendbar ist.

17. Bildgebender Brandmelder nach einem der vorhergehenden Ansprüche, **dadurch gekennzeichnet, dass** der Prozessor (2) so ausgebildet ist, dass der Prozessor (2) in Abhängigkeit einer Mehrheitsentscheidung von charakteristischen Kenngrößen eines Brandes und/oder von Ergebnissen von Analysen der Bildfolgen eine Brandmeldung mittels der Kommunikationsmittel (4, 5) absetzt

## Claims

1. Imaging fire alarm, with the fire alarm having at least one imaging apparatus (1), a processor (2), a memory (3) and communication means (4, 5), and with the processor (2) being designed such that the processor (2) has a fire alarm as a function of an analysis of image sequences which the imaging apparatus (1) produces, and sends the fire alarm if required by means of the communication means (4, 5), **characterized in that** the processor (2) is designed such that it determines the rate of change of the structure sharpness from the image sequences and, if required, derives a fire alarm from this.

2. Imaging fire alarm according to Claim 1, **characterized in that** the processor (2) is designed such that the processor (2) sends with the fire alarm an image or an image sequence by means of the communication means (4, 5).

3. Imaging fire alarm according to Claim 1 or 2, **characterized in that** the imaging apparatus (1), the processor (2), the memory (3) and the communication means (4, 5) are accommodated in a housing.

4. Imaging fire alarm according to Claim 1 or 2, **characterized in that** the imaging apparatus (1) can be used remotely from the processor (2), the memory (3) and the communication means (4, 5).

5. Imaging fire alarm according to Claim 3 or 4, **characterized in that** the imaging apparatus (1) is a video camera.

6. Imaging fire alarm according to Claim 3 or 4, **characterized in that** the imaging apparatus is an infrared camera.

7. Imaging fire alarm according to Claim 6, **characterized in that** the infrared camera is either in the form of a thermal imaging camera, or is in the form of a thermopile array.

8. Imaging fire alarm according to Claim 5 or 6, **characterized in that** the imaging apparatus (1) has an optic.

9. Imaging fire alarm according to Claim 8, **characterized in that** the imaging apparatus is equipped with a light source.

10. Imaging fire alarm according to Claim 9, **characterized in that** the fire alarm is designed such that the fire alarm uses the light source to determine giving and/or scatter by smoke in the image sequences.

11. Imaging fire alarm according to one of the preceding claims, **characterized in that** the processor (2) is designed such that the processor (2) determines thermal inhomogeneities and/or smoke clouds in the image sequences by means of data which is stored in the memory (3).

12. Imaging fire alarm according to one of the preceding claims, **characterized in that** the processor (2) is designed such that the processor (2) classifies flames on the basis of the image sequence, and sends the classification with the fire alarm by means of the communication means (4, 5).

13. Imaging fire alarm according to one of the preceding claims, **characterized in that** the processor (2) is designed such that the processor (2) identifies changes in the image sequences by means of a comparison with a reference image, and identifies short-term changes by means of a threshold value for the duration of the change.

14. Imaging fire alarm according to Claim 14, **characterized in that** the processor (2) is designed such that the processor (2) resolves images in the imaging sequences into spatial frequencies, and identifies any change in the image sequence on the basis of the spatial frequency change.

15. Imaging fire alarm according to Claim 14, **characterized in that** additional structures are used for the measurement of the spatial frequencies by the imaging fire alarm, and are in the form of a barcode, with information being coded in the barcode.

16. Imaging fire alarm according to one of the preceding claims, **characterized in that** the fire alarm can be used as an intruder alarm.

17. Imaging fire alarm according to one of the preceding claims, **characterized in that** the processor (2) is designed such that the processor (2) sends a fire alarm by means of the communication means (4, 5) as a function of a majority decision of characteristic variables for a fire and/or of results of analyses of the image sequences.

## Revendications

1. Détecteur d'incendie analyseur d'images, dans lequel le détecteur d'incendie présente au moins un dispositif analyseur d'image (1), un processeur (2), une mémoire (3) et des moyens de communication (4, 5), et dans lequel le processeur (2) est configuré de telle façon qu'il produit une alarme incendie en fonction d'une analyse de suites d'images que produit le dispositif analyseur d'image (1) et transmet l'alarme incendie éventuellement à l'aide des moyens de communication (4, 5),
**caractérisé en ce que**
le processeur (2) est configuré de telle façon qu'il détermine à partir des suites d'images une modification temporelle de la netteté de la structure et qu'il en déduit éventuellement une alarme incendie.

2. Détecteur d'incendie analyseur d'images selon la revendication 1,
**caractérisé en ce que**
le processeur (2) est configuré de telle façon qu'il (2) transmette avec l'alarme incendie une image ou une suite d'images à l'aide des moyens de communication (4, 5).

3. Détecteur d'incendie analyseur d'images selon la revendication 1 ou la revendication 2,
**caractérisé en ce que**
le dispositif analyseur d'images (1), le processeur (2), la mémoire (3) et les moyens de communication (4, 5) sont logés dans un boîtier.

4. Détecteur d'incendie analyseur d'images selon la revendication 1 ou 2,
**caractérisé en ce que**
le dispositif analyseur d'images (1) peut être utilisé séparément du processeur (2), de la mémoire (3) et des moyens de communication (4, 5).

5. Détecteur d'incendie analyseur d'images selon la revendication 3 ou 4,
**caractérisé en ce que**
le dispositif analyseur d'images (1) est une caméra vidéo.

6. Détecteur d'incendie analyseur d'images selon la revendication 3 ou 4,
**caractérisé en ce que**
le dispositif analyseur d'images est une caméra infrarouge.

7. Détecteur d'incendie analyseur d'images selon la revendication 6,
**caractérisé en ce que**
la caméra infrarouge est soit une caméra à images thermiques soit une caméra à champ de thermopiles.

8. Détecteur d'incendie analyseur d'images selon la revendication 5 ou 6,
**caractérisé en ce que**
le dispositif analyseur d'images (1) présente une optique.

9. Détecteur d'incendie analyseur d'images selon la revendication 8,
**caractérisé en ce que**
le dispositif analyseur d'images est équipé d'une source de lumière.

10. Détecteur d'incendie analyseur d'images selon la revendication 9,
**caractérisé en ce que**
le détecteur d'incendie est configuré de telle façon qu'il détermine au moyen de la source de lumière un trouble et/ou une dispersion dans les suites d'images à cause de la fumée.

11. Détecteur d'incendie analyseur d'images selon l'une quelconque des revendications précédentes,
**caractérisé en ce que**
le processeur (2) est configuré de telle façon qu'il détermine, au moyen de données stockées dans la mémoire (3), des traces de chaleur et/ou des nuages de fumées dans les suites d'images.

12. Détecteur d'incendie analyseur d'images selon l'une quelconque des revendications précédentes,
**caractérisé en ce que**
le processeur (2) est configuré de telle façon qu'il opère à l'aide de la suite d'images une classification des flammes, et transmet la classification avec l'alarme incendie à l'aide des moyens de communication (4, 5).

13. Détecteur d'incendie analyseur d'images selon l'une quelconque des revendications précédentes,
**caractérisé en ce que**
le processeur (2) est configuré de telle façon qu'il reconnaît des modifications dans les suites d'images au moyen d'une comparaison avec une image de référence et identifie des variations rapides au moyen d'une valeur seuil pour la durée de la variation.

14. Détecteur d'incendie analyseur d'images selon la revendication 13,
**caractérisé en ce que**
le processeur (2) est configuré de telle façon qu'il opère la résolution d'images des suites d'images en fréquences locales et reconnaît une modification dans la suite d'images à l'aide de la variation des fréquences locales.

15. Détecteur d'incendie analyseur d'images selon la revendication 14,
**caractérisé en ce que**
pour la mesure des fréquences locales par le détecteur d'incendie imageur, des structures supplémentaires sont installées, qui ont la forme de codes-barres, contenant des informations codées.

16. Détecteur d'incendie analyseur d'images selon l'une quelconque des revendications précédentes,
**caractérisé en ce que**
le détecteur d'incendie peut être utilisé comme détecteur d'intrusion.

17. Détecteur d'incendie analyseur d'images selon l'une quelconque des revendications précédentes,
**caractérisé en ce que**
le processeur (2) est configuré de telle façon qu'il transmet une alarme incendie à l'aide des moyens de communication (4, 5) en fonction d'une décision majoritaire de paramètres caractéristiques d'un incendie et/ou des résultats d'analyses des suites d'images.
